# EUROPÄISCHE PATENTSCHRIFT

(11) **EP 0 913 898 B1**
(45) Veröffentlichungstag und Bekanntmachung des Hinweises auf die Patenterteilung: **18.06.2003**
(21) Anmeldenummer: 98810780.1
(22) Anmeldetag: 14.08.1998
(51) Int. Cl.: H02B 11/133, H01H 9/22

(54) **Sicherheits-Türschliessystem für Schaltschränke**
Security, door-locking system for electrical cabinets
Système de fermeture de porte de sécurité pour armoires électriques

(30) Priorität: 30.10.1997 DE 19747987
(43) Veröffentlichungstag der Anmeldung: 06.05.1999
(73) Patentinhaber: ABB Schweiz AG, 5400 Baden (CH)
(72) Erfinder: Xenaki, Georg, 8854 Siebnen (CH); Schietzsch, Holmar, 4852 Rothrist (CH)
(74) Vertreter: ABB Patent Attorneys

(56) Entgegenhaltungen:
- GB-A- 883 348
- US-A- 3 141 074
- US-A- 3 991 291

## Beschreibung

### TECHNISCHES GEBIET

Die Erfindung bezieht sich auf das Gebiet der Sicherheitstechnik für elektrische Schaltschränke. Bei der Erfindung wird ausgegangen von einem Sicherheits-Türschliessystem nach dem Oberbegriff des Patentanspruch 1.

Sicherheits-Türschliessysteme genannter Art sind beispielsweise bekannt aus der Anzeige "Miniatur Sicherheitstürschalter", in der Publikation "Aktuelle Technik", Nr. 5/96, Seite 397, der B + L Verlags AG.

### TECHNOLOGISCHER HINTERGRUND UND STAND DER TECHNIK

Sicherheits-Türschliessystem für Schaltschränke in elektrischen Anlagen, wie sie aus dem Stand der Technik bekannt sind, dienen der Betriebssicherheit und dem Schutz des Personals, das die elektrischen Anlagen bedient und betreut. Einfachste Art einer gesicherten Türverriegelung stellt beispielsweise das Verschliessen der Schaltschranktüren mit einer nur mit Spezialwerkzeug bedienbaren Vielzahl von Schraubsystemen dar. Entscheidend nachteilig ist an einer derartigen Verschraubung, dass sie lediglich von Fachpersonal mit entsprechender Ausrüstung unter grossem zeitlichen Aufwand zu öffnen sind, was zum Beispiel in einem Störungsfall innerhalb eines Schaltschrankes sehr hinderlich ist. Zudem ist eine einfache Verschraubung nicht mit einem Betriebszustand innerhalb eines Schaltschrankes koppelbar, so dass ein gesicherter elektrischer Schaltzustand vor dem Öffnen der Schranktüre vom in Verantwortung des Fachpersonals eingelegt werden muss.

Eine bei weitem einfacher bedienbare Verriegelungseinrichtung ist bekannt unter dem Namen "Kirk Key" - Verriegelungssystem. Ein derartiges System umfasst in einer mechanischen Verriegelungseinheit wenigstens zwei miteinander gekoppelte Schliesszylinder mit unterschiedlicher Kodierung für die zugehörigen Schlüssel. Auf diese Art wird erzwungen, dass beispielsweise mittels einem ersten Schlüssel vor dem Öffnen eines Schaltschrankes eine Schaltstellung für einen Erdungsschalter eingelegt werden muss, woraufhin der zweite Schlüssel in der Verriegelungseinheit frei bedienbar wird, mit welchem zweiten Schlüssel daraufhin eine Schranktür zu öffnen ist. Sind auf diese Art eine Vielzahl von Schaltschränken in Reihe hintereinander mechanisch verriegelt, so ist ein Öffnen des letzten Schrankes in der Reihe ebenfalls entsprechend zeitintensiv.

Ein Sicherheits-Türschliessystem für einen Schaltschrank ist weiterhin in der US 3,141,074 angegeben, wobei der elektrische Betriebszustand innerhalb des Schaltschrankes mit einer Verriegelung einer Schranktüre des Schaltschrankes in Wirkverbindung steht. Eine Schalterstellung eines Schalters in dem Schaltschrank ist dabei über ein mechanisches Verbindungssystem mit einem Verriegelungsgestänge der Schranktüre gekoppelt.

Ein Beispiel für eine kombinierte elektro-mechanische Verriegelung zeigt der Stand der Technik in der Anzeige " Miniatur Sicherheitstürschalter", in der Publikation "Aktuelle Technik", Nr. 5/96, Seite 397, der B + L Verlags AG. Eine derartige Verriegelungsvariante umfasst im wesentlichen einen im Schaltschrank montierten Türschalter, der mit einem kodierten, an der Schranktür befestigten Schlüssel zusammenwirkt. Hierbei wird der Türschalter elektrisch gesteuert und der Schlüssel mechanisch in dem Türschalter in Abhängigkeit der Steuerung fixiert oder freigegeben. In einfacher Weise kann somit eine Vielzahl von Schaltschränken parallel in logischer Abhängigkeit von geforderten Schaltstellungen von Schaltern innerhalb der Schaltschränke gesteuert ver- oder entriegelt werden. Nachteilig an derartigen Verriegelungssystemen ist ihr zwar breiter aber dennoch eingeschränkter Arbeitstemperaturbereich. Zudem ist das besagte System unmittelbar Abhängig von der Betriebssicherheit des speisenden elektrischen Netzes für die Türschalter und des weiteren von der Betriebssicherheit der angeschlossenen Steuerung. Hinzu kommt, dass eine Installation dieser Art entsprechend kosten- und wartungsintensiv ist.

### DARSTELLUNG DER ERFINDUNG

Aufgabe der Erfindung ist es, die genannten Nachteile zu vermeiden, das heisst, ein Sicherheits-Türschliessystem so auszubilden, dass es mit vergleichsweise reduziertem Aufwand hinsichtlich Kosten und Installation erstellbar ist, und zudem unter Gewährleistung optimaler elektrischer Sicherheit unabhängig von einer elektrischen Speisung und/oder Steuerung und unter frei wählbaren klimatischen Umgebungsbedingungen betriebstauglich ist.

Erfindungsgemäss wird die Aufgabe durch die Merkmale des ersten Anspruchs gelöst.

Die Vorteile der Erfindung sind unter anderem darin zu sehen, dass eine Schalterstellung eines in einem Schaltschrank installierten Schalters mittels mechanischer Verbindungselemente mit einem Verriegelungsgestänge der Schranktüre in Wirkverbindung steht. Somit ist die Verriegelung der Schranktüre mittelbar logisch verknüpft mit der Schalterstellung des Schalters.

Eine besonders bevorzugte Ausgestaltung der Erfindung sieht vor, dass eine mit der Schalterstellung des Schalters unmittelbar verbundene drehbar gelagerte Steuerscheibe vorgesehen ist, die entsprechend der Schalterstellung mittelbar eine Verriegelungsstange zwecks Ver- oder Entriegelung einer Schaltschranktüre verschiebt. Die beim Schalten des Schalters aufgebrachte Drehbewegung wird mit einer an die Steuerscheibe angebrachten Verbindungsstange und einem Verbindungswinkel in eine horizontale Verschieberichtung für die Verriegelungsstange umgesetzt. Die Verriegelungsstange ist zudem über einen Verschlusshebel mit dem Verriegelungsgestänge der Schranktür verbunden, wobei nur die gewünschten Schaltzustände des Schalters in einer und-Verknüpfung mit der Stellung des Verriegelungsgestänges in Hinblick auf grösstmögliche Betriebsicherheit möglich sind.

Weitere Ausgestaltungen der Erfindung sind durch die Unteransprüche umfasst.

### KURZE BESCHREIBUNG DER ZEICHNUNG

Die Erfindung wird nachstehend anhand eines Ausführungsbeispiels näher erläutert, und zwar zeigt die
- Fig.1: eine schematische Darstellung einer Schrankanordnung mehrerer benachbarter Schaltschränke mit dem erfindungsgemässen Verriegelungssystem;
- Fig.2: das Funktionsprinzip der Verriegelungsssystems;
- Fig.3a: eine Querschnittdarstellung eines Schaltschrankes;
- Fig.3b: das Detail X aus Fig.3a mit verriegelter Schranktüre;
- Fig.3c: das Detail X aus Fig.3a mit entriegelter Schranktüre.

Es sind nur die für das Verständnis der Erfindung wesentlichen Elemente gezeigt. Alle bezeichneten Teile weisen in allen Figuren gleiche Bezugszeichen auf.

### WEG ZUR AUSFÜHRUNG DER ERFINDUNG

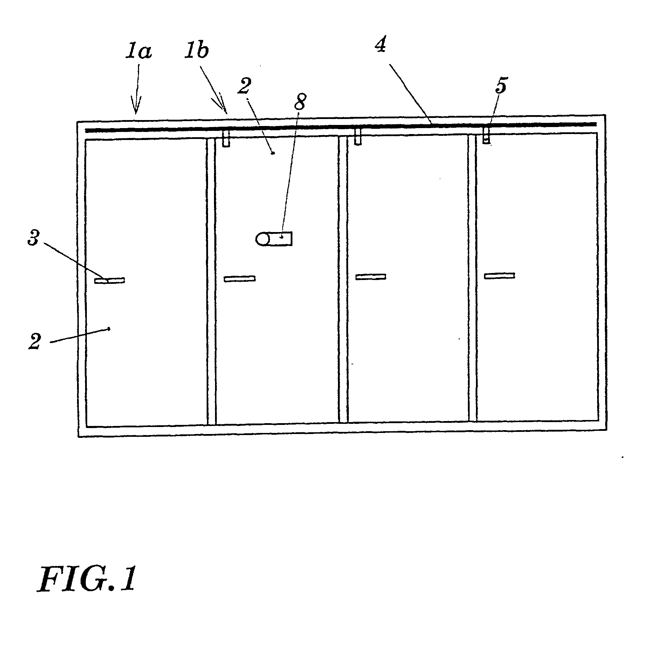

In der Fig.1 sind mit 1 Schaltschränke für Elektroinstallationen bezeichnet, von denen beispielhaft der Schaltschrank 1a für eine Niederspannungsinstallation vorgesehen ist, also keiner besonderen Verriegelungseinrichtung bedarf, wohingegen der Schaltschrank 1b für eine Hochspannungsinstallation mit einer Verriegelungseinrichtung, namentlich Verschlusshebel 5, versehen ist. Im Beispielsfall befindet sich im Schaltschrank 1b ein nicht dargestellter Erdungsschalter, der sich ausserhalb des Schaltschrankes 1b mittels eines an der Schranktüre 2 angeordneten Schaltergriffs 8 bedienen lässt. Mit diesem nicht dargestellten Erdungsschalter ist die gesamte elektrische Einrichtung in den gezeigten Schaltschränken mit Erdpotential verbindbar, womit ein Arbeiten an der elektrischen Installation innerhalb der Schaltschränke 1 gesichert möglich ist.

Alle Schaltschränke 1b mit einer Hochspannungsinstallation weisen ein gemeinsames, mechanisch gesteuertes Verriegelungssystem in Verbindung mit der Stellung des Erdungsschalters auf, der durch den Schaltergriff 8 repräsentiert wird. In der Darstellung der Fig.1 ist lediglich die allen Schaltschränken gemeinsame Verriegelungsstange 4 und die mit ihr in Wirkverbindung stehenden Verschlusshebel 5 für jeden Schaltschrank 1b sichtbar. Die Verschlusshebel 5 sind, wie später näher erläutert ist, mittelbar an die Türgriffe 3 der Schaltschränke gekoppelt.

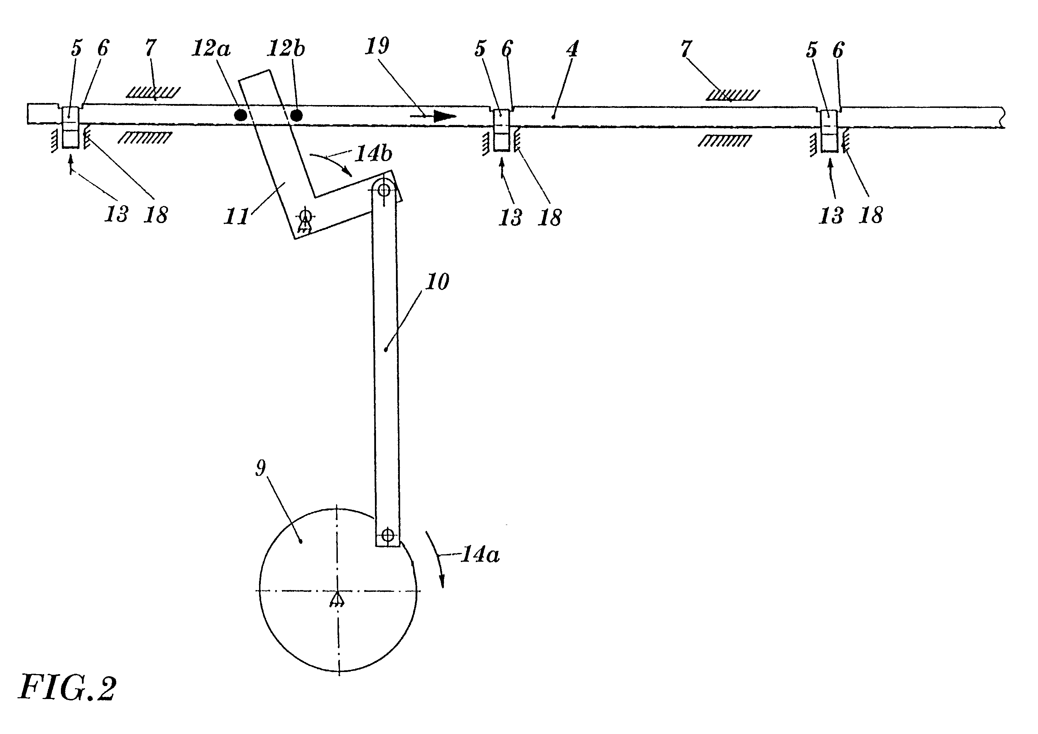

Anhand der Fig.2 wird nun das Funktionsprinzip des erfindungsgemässen Sicherheits-Türschliessystems gezeigt. Dabei wurde an dieser Stelle auf die Darstellung der Schaltschränke zugunsten der Übersichtlichkeit verzichtet. Der in Fig.1 vorgestellte Schaltergriff 8 ist mit einer drehbar 14a gelagerten Steuerscheibe 9 (Fig.2) verbunden. Eine Verbindungsstange 10 ist exzentrisch zu dieser Steuerscheibe 9 an derselben angeordnet. Des weiteren ist die Verbindungsstange 10 mit einem ebenfalls drehbar 14b gelagerten Verbindungswinkel 11 verbunden, der an seinem freien Ende zwischen zwei Führungsstiften 12a und 12b der Verriegelungsstange 4 angeordnet ist. Die Verriegelungsstange 5 selbst ist über ihre Gesamtlänge durch alle benachbarten (nicht dargestellten) Schaltschränke in Führungslagern 7 gehalten.

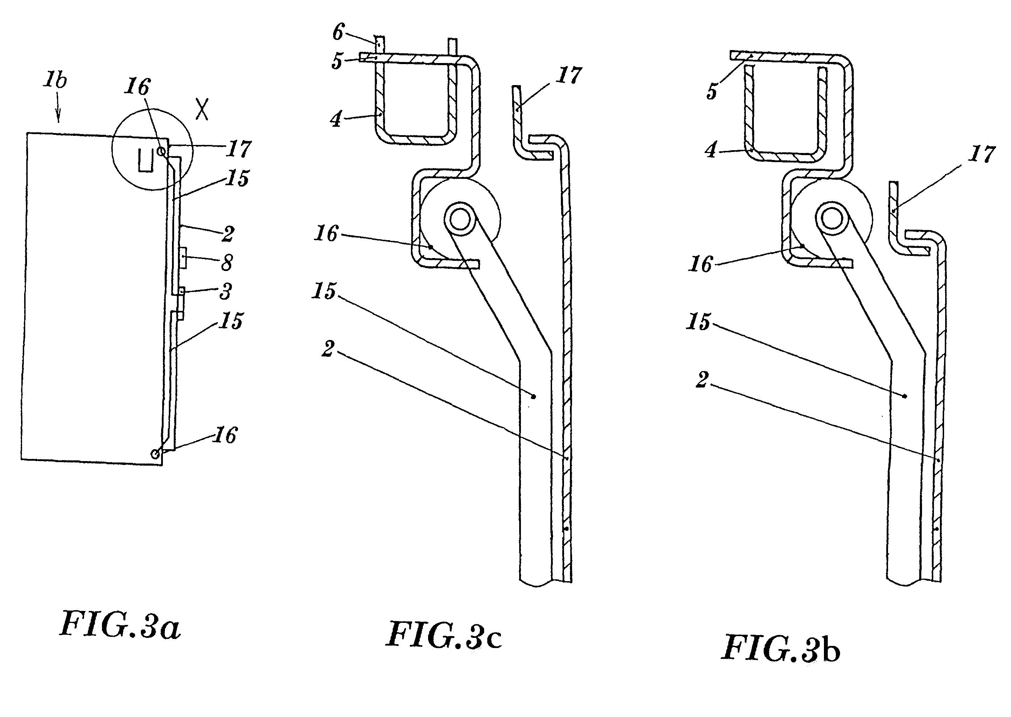

Jedem zu verriegelnden Schaltschrank 1b ist ein Verschlusshebel 5 zugeordnet, welcher Verschlusshebel 5, wie im folgenden anhand Fig.3 erläutert wird, mit einem Verriegelungsgestänge 15 der Schranktüre 2 in Wirkverbindung steht.

Sind alle Verschlusshebel 5, wie Fig.2 zeigt, in der unteren Endlage in ihren Führungslagern 18, so ist die Verriegelungsstange 4 blockiert. Sie kann nicht in horizontaler Richtung 19 verfahren werden, da die Verschlusshebel 5 in Ausnehmungen 6 der Verriegelungsstange angreifen und somit eine Verschiebung verunmöglichen.

Werden hingegen alle Verschlusshebel in ihre obere Endlage gebracht, also in Richtung 13 verschoben, so wird die Blockierung in den Ausnehmungen freigegeben und die Verriegelungsstange ist horizontal 19 verfahrbar. Dies bedeutet, dass mittels des Schaltergriffs 8 (Fig.1) die Steuerscheibe 9 in Richtung 14a und der Verbindungswinkel 11 in Richtung 14b drehbar ist, womit zum einen die Schalterstellung des nicht dargestellten Erdungschalters wählbar ist und zudem die Verriegelungsstange 4 zum Zweck der Verriegelung verschoben wird.

Die Verriegelung der Schranktüren 2 wird nun anhand der Fig.3 vorgestellt. Fig.3a zeigt einen stark vereinfachten Schnitt durch den Schaltschrank 1b und seiner Schranktüre 2. Die Schranktüre 2 wird oben und unten durch Abschnitte der Schrankwand 17 begrenzt. Ist die Schranktüre 2 verschlossen, lehnen sich mit dem Verriegelungsgestänge 15 Schliessrollen 16 oben und unten an die Innenseiten der Schrankwand 17 an. Zum Verschliessen der Schranktüre wird der mit dem Verriegelungsgestänge 15 in Verbindung stehende Türgriff 3 in eine entsprechende Position bebracht. Das Detail X in Fig.3a ist in Fig.3b genauer gezeigt.

In der Fig.3b ist die Verriegelungsstange 4 mit einem Verschlusshebel 5 in Schnittdarstellung gezeigt. Bei verschlossener Schranktüre 2 ist der durch die Verschlussrolle 16 gehaltene Verschlusshebel 5 in seiner oberen Endlage gehalten. Befindet sich der Verschlusshebel 5 in dieser Position, so ist die Verriegelungsstange 4 frei verschiebbar 19 senkrecht zur Zeichnungsebene und die Schranktüre kann bei verschobener Verriegelungsstange 4 nicht geöffnet werden, da der Verschlusshebel 5, nicht in eine Ausnehmung 6 der Verriegelungsstange 4 eingreift.

Ist die Ausnehmung 6 der Verriegelungsstange 4 so positioniert, dass der Verschlusshebel 5, wie Fig.3c zeigt, darin angreifen kann, so ist das Verriegelungsgestänge 15 zu Öffnen der Schranktüre 2 durch den Türgriff 3 (Fig.3a) bedienbar. In diesem Fall ist dann der nicht dargestellte Erdungsschalter für die sichere Erdung aller Schaltschrankinstallationen eingelegt. Ist die Schranktüre 2 verschlossen wie in Fig.3b, kann die Schaltschrankinstallation enterdet werden und in den Betriebszustand versetzt werden.

Mit dem erfindungsgemässen Sicherheits-Türschliessystem wird eine sichere und einfache Schranktürverriegelung gewährleistet, wobei auch einer geforderten Dreipunkt-Schliessung Rechnung getragen wird, indem die Verschliessrollen 16 oben wie unten in die Schrankwand greifen, und zudem ein nicht dargestellter, weil hinreichend bekannter, Schliessriegel im Schloss an dem Türgriff vorgesehen ist. Dieses rein mechanisch wirkende Sicherheits-Türschliessystem zeigt zudem ebenfalls wegen seiner Robustheit eine unbegrenzte Einsatzmöglichkeit in klimatischer Hinsicht,

Ohne den Erfindungsgedanken zu verlassen ist selbstverständlich auch denkbar in Abhängigkeit von einem beliebigen Schalter, eine Türverriegelung gezeigter Art zu realisieren. Hierbei sei noch darauf hingewiesen, dass eine beliebige Anzahl Schaltschränke über ein Verriegelungssystem parallel koppelbar ist und zudem auf einfache Art erweitert werden kann.

### BEZUGSZEICHENLISTE

- 1a, b: Schaltschrank
- 2: Schranktüre
- 3: Türgriff
- 4: Verriegelungsstange
- 5: Verschlusshebel
- 6: Ausnehmung
- 7: Führungslager für 4
- 8: Schaltergriff
- 9: Steuerscheibe
- 10: Verbindungsstange
- 11: Verbindungswinkel
- 12a, b: Führungsstifte
- 13: Bewegungsrichtung von 5
- 14a: Drehrichtung von 9
- 14b: Drehrichtung von 11
- 15: Verriegelungsgestänge
- 16: Schliessrolle
- 17: Schrankwand
- 18: Führungslager für 5
- 19: Bewegungsrichtung von 4

## Patentansprüche

1. Sicherheits-Türschliessystem für einen Schaltschrank (1), bei dem der elektrische Betriebszustand innerhalb des Schaltschrankes (1) mit einer Verriegelung einer Schranktüre (2) des Schaltschrankes (1) in Wirkverbindung steht, wobei eine Schalterstellung eines Schalters in dem Schaltschrank (1) über ein mechanisches Verbindungssystem (8, 9, 10, 11, 12, 4, 5) mit einem Verriegelungsgestänge (15) der Schranktüre (2) gekoppelt ist, **dadurch gekennzeichnet,**
**dass** ein Schaltergriff (8) ausserhalb des Schaltschrankes (1) an der Schranktüre angeordnet ist, wobei der Schaltergriff die Schaltstellung des Schalters repräsentiert,
**dass** eine drehbar (14a) gelagerte Steuerscheibe (9) mit dem Schaltergriff (8) verbunden ist und zudem fest mit dem Schalter in dem Schaltschrank (1) verbunden ist,
**dass** die Steuerscheibe (9) und eine Verriegelungsstange (4) in einer mechanischen Wirkverbindung stehen, und
**dass** die Verriegelungsstange (4) zwecks Verriegelung des Verriegelungsgestänges (15) der Schranktüre (2) verschiebbar (19) gelagert ist.

2. Sicherheits-Türschliessystem nach Anspruch 1
**dadurch gekennzeichnet,**
**dass** die Steuerscheibe (9) und die Verriegelungsstange (4) über eine Verbindungsstange (10) und einen zwischen Führungsstiften (12a, b) in der Verriegelungsstange (4) gehaltenen Verbindungswinkel (11)) in einer mechanischen Wirkverbindung stehen .

3. Sicherheits-Türschliessystem nach Anspruch 2
**dadurch gekennzeichnet,**
**dass** die Verriegelungsstange (4) über einen Verschlusshebel (5) mit dem Verriegelungsgestänge (15) der Schranktüre (2) in Wirkverbindung steht.

## Claims

1. Safety door-locking system for a switchgear cabinet (1), in which the electric operating state inside the switchgear cabinet (1) is operationally connected to a locking device of a cabinet door (2) of the switchgear cabinet (1), a position of a switch in the switchgear cabinet (1) being coupled via a mechanical connecting system (8, 9, 10, 11, 12, 4, 5) to a locking linkage (15) of the cabinet door (2), **characterized in that** a switch handle (8) is arranged outside the switchgear cabinet (1) on the cabinet door, the switch handle representing the position of the switch, **in that** a rotatably (14a) mounted control disc (9) is connected to the switch handle (8) and also permanently connected to the switch in the switchgear cabinet (1), **in that** the control disc (9) and a locking rod (4) are operationally connected mechanically, and **in that** the locking rod (4) is mounted displaceably (19) for the purpose of locking the locking linkage (15) of the cabinet door (2).

2. Safety door-locking system according to Claim 1, **characterized in that** the control disc (9) and the locking rod (4) are operationally connected mechanically via a connecting rod (10) and a connecting angle (11) held between guide pins (12a, b) in the locking rod (4).

3. Safety door-locking system according to Claim 2, **characterized in that** the locking rod (4) is operationally connected to the locking linkage (15) of the cabinet door (2) via a locking lever (5).

## Revendications

1. Système de verrouillage de porte de sécurité pour une armoire électrique (1), dans lequel l'état de fonctionnement électrique à l'intérieur de l'armoire électrique (1) se trouve en relation active avec un verrouillage d'une porte d'armoire (2) de l'armoire électrique (1), une position de commutateur d'un commutateur dans l'armoire électrique (1) étant couplée par l'intermédiaire d'un système de connexion mécanique (8, 9, 10, 11, 12, 4, 5) à une tringlerie de verrouillage (15) de la porte d'armoire (2), **caractérisé en ce**
**qu'**une poignée d'interrupteur (8) est disposée à l'extérieur de l'armoire électrique (1) sur la porte d'armoire, la poignée d'interrupteur représentant la position de commutation du commutateur
**qu'**un disque de commande (9) pivotant (14a) est relié à la poignée d'interrupteur (8) et est en outre relié solidement au commutateur dans l'armoire électrique (1),
**que** le disque de commande (9) et une barre de verrouillage (4) se trouvent dans une relation active mécanique, et
**que** la barre de verrouillage (4) est reçue de façon mobile (19) en vue du verrouillage de la tringlerie de verrouillage (15) de la porte d'armoire (2).

2. Système de fermeture de porte de sécurité selon la revendication 1,
**caractérisé en ce que**
le disque de commande (9) et la barre de verrouillage (4) se trouvent dans une relation active mécanique par l'intermédiaire d'une barre de connexion (10) et d'un coude de connexion (11) maintenu entre des tenons de guidage (12a, b) dans la barre de verrouillage (4).

3. Système de fermeture de porte de sécurité selon la revendication 2,
**caractérisé en ce que**
la barre de verrouillage (4) se trouve dans une relation active avec la tringlerie de verrouillage (15) de la porte d'armoire (2) par l'intermédiaire d'un levier de fermeture (5).
